# FASCICULE DE BREVET EUROPEEN

(11) **EP 3 086 079 B1**
(45) Date de publication et mention de la délivrance du brevet: **30.08.2017**
(21) Numéro de dépôt: 16290068.2
(22) Date de dépôt: 12.04.2016
(51) Int. Cl.: F42C 1/00, F42C 19/07

(54) **DISPOSITIF DE DÉTECTION D'IMPACT, EN PARTICULIER POUR MISSILE**
AUFPRALLERFASSUNGSVORRICHTUNG, INSBESONDERE FÜR RAKETE
IMPACT DETECTION DEVICE, IN PARTICULAR FOR A MISSILE

(30) Priorité: 20.04.2015 FR 1500818
(43) Date de publication de la demande: 26.10.2016
(73) Titulaire: MBDA France, 92350 Le Plessis-Robinson (FR)
(72) Inventeur: Greiner, Bernard, 91400 Orsay (FR); Loosfeld, Mathieu, 91300 Massy (FR); Tastets, Kevin, 78170 La Celle Saint Cloud (FR)
(74) Mandataire: Gevers & Orès

(56) Documents cités:
- GB-A- 2 198 504
- US-A- 3 589 295
- US-A1- 2010 307 363

## Description

La présente invention concerne un dispositif de détection d'impact, en particulier pour un missile, dont la publication US 2010/0307363 A1 est un exemple d'art antérieur. La détection de l'impact d'un missile sur une cible, permet d'activer une chaîne de létalité du missile. Il est nécessaire, pour cela, de connaître précisément l'instant de l'impact de la pointe avant du missile sur la cible, afin de pouvoir déclencher la chaîne de létalité au moment optimal.

Pour ce faire, le missile doit être pourvu d'un dispositif de détection d'impact (ou capteur d'impact), répondant à des conditions très strictes. En particulier :
- le capteur d'impact ne doit pas être détruit avant d'avoir envoyé l'information d'impact à un système de déclenchement de la (des) charge(s) militaire(s) ;
- la probabilité de bon fonctionnement du capteur d'impact doit être maximale ;
- la probabilité de fausse alarme conduisant à un déclenchement intempestif de la charge doit être minimale ; et
- la datation du moment de l'impact doit être très précise.

Généralement, le capteur d'impact doit également être configuré pour tenir compte de la présence d'un autodirecteur dans la pointe avant du missile. La plupart des missiles à autodirecteurs intègrent des capteurs de détection de la cible. Ces capteurs peuvent être des capteurs de proximité (« fusées de proximité ») quand le besoin est de déclencher la charge à proximité de la cible.

Dans le cas où le besoin est la détection de l'impact de la pointe avant sur la cible, on utilise fréquemment un dispositif conçu pour détecter l'ouverture (rupture) d'une boucle de conducteur électrique. Toutefois, la fiabilité d'une telle boucle de conducteur électrique n'est pas optimale. Il existe en effet un risque que la boucle électrique se referme, même de manière très brève, pendant le choc. En outre, dans certaines configurations, l'utilisation d'un dispositif électrique peut poser des problèmes de sécurité vis-à-vis de la charge militaire qui peut être installée à proximité, ce qui nécessite la mise en place d'un blindage électromagnétique (augmentant la masse de l'ensemble).

Pour remédier en partie à ces inconvénients, on connaît par le document FR-2 549 595, un capteur d'impact pour un projectile susceptible d'arriver au contact d'un objectif en une zone quelconque d'une enveloppe. L'enveloppe se limite à une coiffe recouvrant une partie avant de la structure du projectile. Le capteur d'impact comprend un guide diélectrique d'ondes optiques, qui est solidaire de l'enveloppe dans toutes les zones pouvant venir au contact à l'impact et qui transmet un flux lumineux d'un émetteur à un récepteur. Le guide diélectrique est constitué d'une fibre optique ou d'un faisceau de fibres optiques qui sont suffisamment souples pour suivre un trajet sinueux sur l'enveloppe. La fibre optique est embobinée en hélice à pas fixe ou variable, en étant fixée à l'extérieur ou à l'intérieur de la coiffe.

Toutefois, ce capteur d'impact usuel à guide diélectrique d'ondes optiques n'est pas optimal. En particulier, son montage est difficile, il n'est pas aisément reproductible et son mode de rupture n'est pas prédictif.

La présente invention a pour objet de remédier à au moins certains de ces inconvénients. Elle concerne un dispositif de détection d'impact, en particulier pour un missile, ledit dispositif comprenant au moins un guide d'onde pourvu à chacune de ses deux extrémités d'un connecteur.

Selon l'invention, ledit dispositif comporte un anneau de contour externe courbe, ledit anneau formant une pièce indépendante à surfaces radiales planes, et ledit guide d'onde est intégré dans l'épaisseur de l'anneau autour de cet anneau, les deux extrémités du guide d'onde étant agencées à l'extérieur de l'anneau.

Ainsi, grâce à l'intégration du guide d'onde dans le matériau (précisé ci-après) de l'anneau, le mode de rupture de la liaison formée par le guide d'onde devient prédictif, comme précisé ci-dessous. De plus, le dispositif de détection d'impact comprend ainsi une pièce en forme d'anneau qui peut être reproduite facilement et montée aisément, et ceci sur divers types de missile.

Avantageusement :
- ledit anneau est réalisé dans l'un des matériaux suivants : un matériau plastique, un matériau composite, un matériau amorphe, un matériau cristallin ; et/ou
- ledit guide d'onde correspond à l'un des éléments suivants : une fibre optique, une structure de guide d'onde.

Dans un mode de réalisation particulier, la pièce comporte un enrésinage au niveau d'une zone de sortie hors de l'anneau, de deux parties du guide d'onde, ledit guide d'onde correspondant à une fibre optique.

En outre, avantageusement, au moins une partie d'au moins un tronçon d'extrémité du guide d'onde, agencé à l'extérieur de l'anneau, est pourvue d'une gaine de protection mécanique.

Par ailleurs, dans un mode de réalisation particulier :
- ledit anneau comprend au moins une zone de fragilisation formée d'un retrait de matière ;
- la zone de fragilisation est agencée à proximité d'une zone de fixation destinée à la fixation de l'anneau.

La présente invention concerne également un système de détection d'impact. Selon l'invention, ce système comporte un dispositif de détection d'impact tel que précité, ainsi qu'une unité de traitement de signaux. L'unité de traitement de signaux comprend au moins un élément d'émission d'un faisceau optique, un élément de détection d'un faisceau optique et un élément de traitement de données lié auxdits éléments d'émission et de détection. L'unité de traitement de signaux est liée au guide d'onde du dispositif de détection d'impact de sorte que l'élément d'émission est apte à émettre un faisceau optique à l'entrée d'une des deux extrémités du guide d'onde et l'élément de détection est apte à détecter un tel faisceau optique à sa sortie de l'autre des extrémités du guide d'onde.

La présente invention concerne, en outre, un missile comprenant un corps et à l'extrémité avant dans le sens de déplacement dudit missile une ogive, l'ogive étant fixée à l'avant du corps via une interface de fixation, ledit missile comportant :
- un dispositif de détection d'impact tel que précité, qui est agencé entre le corps cylindrique et l'ogive au niveau de l'interface de fixation ; et/ou
- un système de détection d'impact tel que décrit ci-dessus.

Dans un mode de réalisation particulier, l'anneau du dispositif de détection d'impact comporte une section correspondant à la section du missile au niveau de l'interface de fixation.

La présente invention concerne, par ailleurs, un procédé de fabrication d'un dispositif de détection d'impact comprenant de préférence une fibre optique comme guide d'onde. Selon l'invention, ledit procédé comprend au moins la suite d'étapes successives suivantes, consistant :
- à former au moins une couche de matériau ;
- à pratiquer une rainure circulaire dans la couche de matériau, cette rainure circulaire étant destinée à servir de logement ;
- à monter la fibre optique dans le logement formé par ladite rainure circulaire, en prévoyant que les deux extrémités de la fibre optique sortent du matériau ;
- à agencer au moins une couche supplémentaire de matériau sur ladite couche de matériau et ladite rainure circulaire, de manière à former un ensemble monobloc dont le logement est fermé ; et
- à découper un anneau dans ledit ensemble monobloc autour dudit logement de manière à former ladite pièce indépendante.

Avantageusement, ledit procédé comporte une étape supplémentaire consistant à réaliser un enrésinage au niveau d'une zone de sortie des deux extrémités de la fibre optique.

Les figures annexées feront bien comprendre comment l'invention peut être réalisée. Sur ces figures, des références identiques désignent des éléments semblables.
Les figures 1 et 2 montrent très schématiquement une partie avant d'un missile auquel s'applique la présente invention.
La figure 3 est un schéma synoptique d'un système de détection d'impact.
Les figures 4 et 5 montrent schématiquement des modes de réalisation particuliers d'un dispositif de détection d'impact.
Les figures 6 et 7 montrent schématiquement des tronçons d'un anneau d'un dispositif de détection d'impact, selon deux variantes de réalisation différentes.
La figure 8 est une vue schématique montrant une partie d'un guide d'onde intégré dans l'épaisseur d'une partie d'une pièce en anneau.
Les figures 9 à 11 montrent schématiquement différentes positions successives lors de l'impact d'un missile pourvu d'un dispositif de détection d'impact, sur une cible.

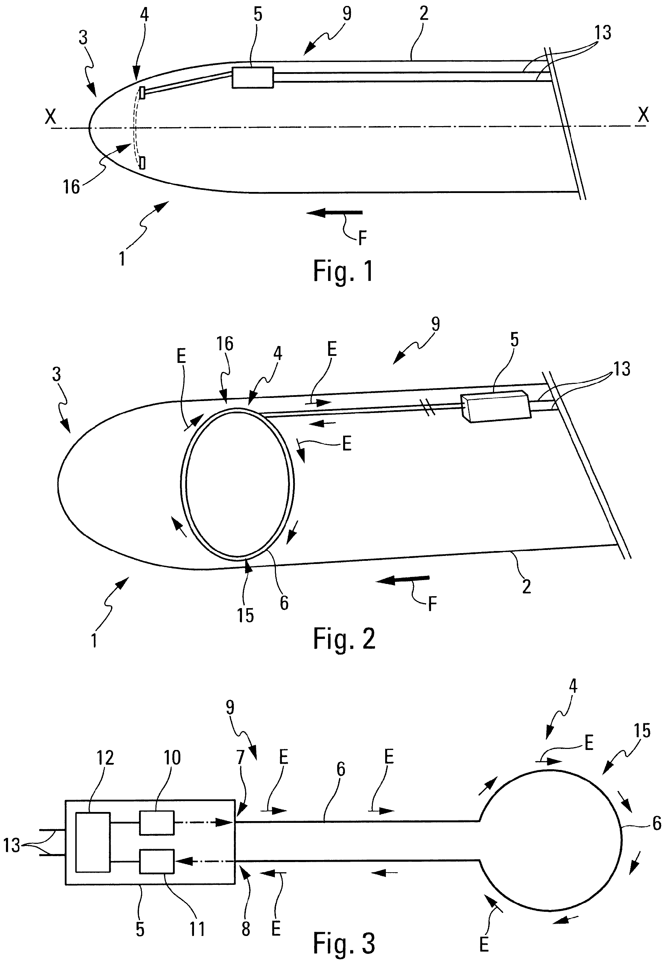

La présente invention s'applique à un missile 1 représenté schématiquement et partiellement sur les figures 1 et 2, qui comprend un corps cylindrique 2 d'axe longitudinal X-X pourvu à l'avant (dans le sens de déplacement F dudit missile 1) d'une ogive 3.

Le missile 1 comprend également des moyens usuels (non représentés) pour son guidage, tels que des gouvernes, et des éléments intégrés notamment un autodirecteur et une charge (également non représentés).

L'ogive 3 est fixée à l'avant du corps 2 via une interface de fixation (non représentée spécifiquement).

Le missile 1 comporte également un système de détection d'impact (ci-après « système 9 »). Ce système 9 embarqué comprend, comme représenté par exemple sur la figure 3 :
- un dispositif de détection d'impact (ci-après « dispositif 4 »), qui est agencé entre le corps cylindrique 2 et l'ogive 3 au niveau de l'interface de fixation ; et
- une unité 5 de traitement de signaux.

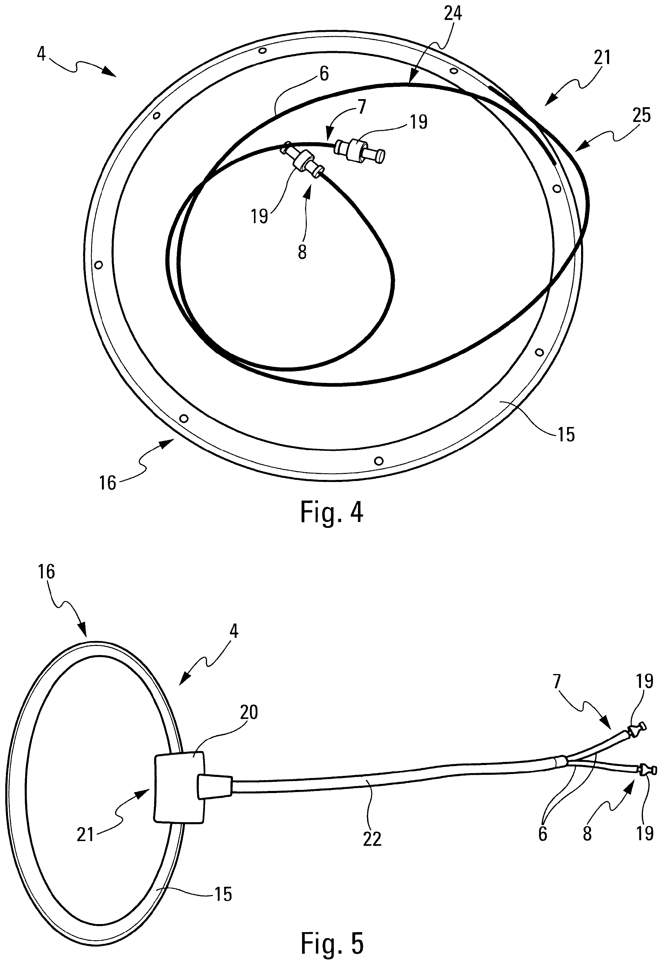

Le dispositif 4 (de détection d'impact) comprend au moins un guide d'onde 6 pourvu, à chacune de ses deux extrémités 7 et 8, d'un connecteur 19 usuel (figures 4 et 5).

Comme représenté sur la figure 3, l'unité 5 de traitement de signaux comprend un élément 10 d'émission d'un faisceau optique, qui est lié par un élément de connexion coopérant au connecteur 19 de l'extrémité 7 et qui émet un faisceau optique dans le guide d'onde 6 à cette extrémité 7. Ce faisceau optique circule dans le guide d'onde 6, comme illustré par des flèches E sur les figures 2 et 3. L'unité 5 de traitement de signaux comprend également un élément 11 de détection d'un faisceau optique, qui est lié par un élément de connexion coopérant au connecteur 19 de l'extrémité 8 du guide d'onde 6 et qui reçoit le faisceau optique émis par l'élément 10 après son passage dans le guide d'onde 6, et un élément 12 de traitement de données lié auxdits éléments 10 et 11 d'émission et de détection.

L'unité 5 de traitement de signaux est donc liée au guide d'onde 6 du dispositif 4 de sorte que l'élément d'émission 10 est apte à émettre un faisceau optique à l'entrée de l'extrémité 7 du guide d'onde 6 et l'élément de détection 11 est apte à détecter un tel faisceau optique à sa sortie à l'autre extrémité 8 du guide d'onde 6.

En cas d'impact du missile 1 sur une cible, le guide d'onde 6 du dispositif 4 est rompu de sorte qu'un faisceau optique émis par l'élément d'émission 10 n'arrive pas à l'élément de détection 11 et n'est donc pas détecté par cet élément de détection 11. L'unité 5 peut alors informer de cette rupture, via des liaisons 13, des moyens embarqués, et en particulier un système de déclenchement d'une charge militaire embarquée qui peut alors déclencher cette charge militaire.

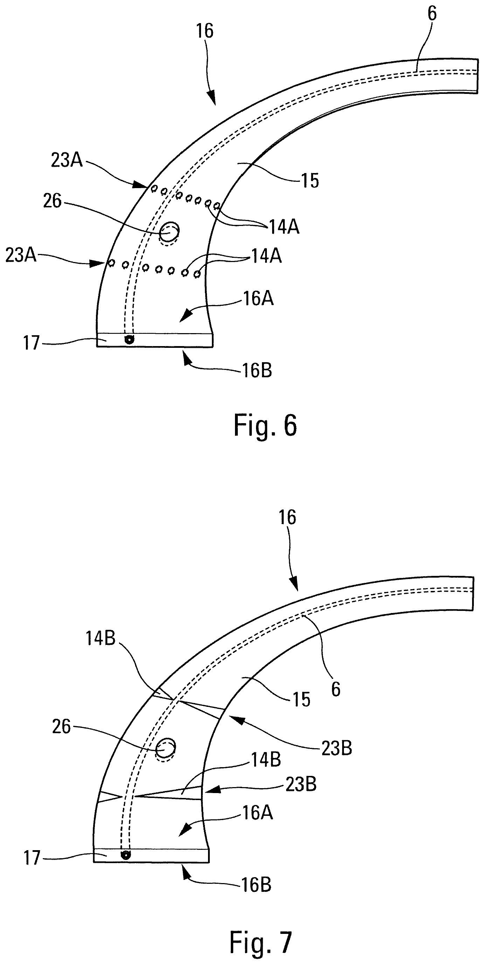

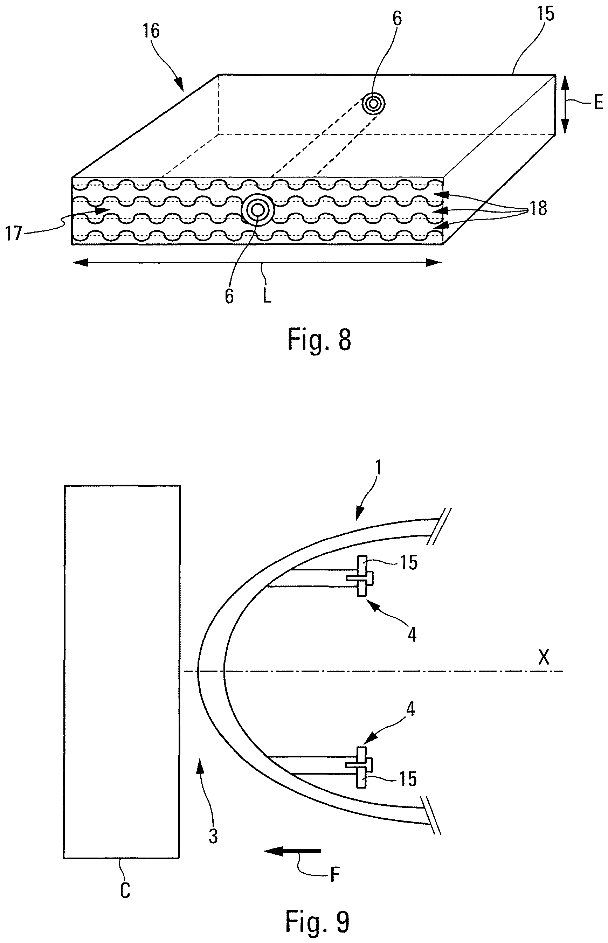

Selon l'invention, comme représenté notamment sur les figures 4 et 5 :
- le dispositif 4 comporte un anneau 15 de contour externe courbe ;
- l'anneau 15 forme une pièce 16 indépendante à surfaces radiales 16A et 16B planes (figures 6 et 7) ;
- ledit guide d'onde 6 est intégré dans l'épaisseur de l'anneau 15 (pourvu d'un matériau 17), comme représenté sur la figure 8, et il est agencé le long (à savoir autour) de cet anneau 15, comme visible sur les figures 6, 7 et 8 ; et
- les extrémités 7 et 8 du guide d'onde 6 sont agencées à l'extérieur de l'anneau 15.

Grâce à l'intégration du guide d'onde 6 dans le matériau 17 de l'anneau 15, le mode de rupture de la liaison formée par le guide d'onde 6 devient prédictif, comme précisé ci-dessous. De plus, le dispositif 4 comprend ainsi une pièce 16 en forme d'anneau qui peut être reproduite facilement et montée aisément, et ceci sur divers types de missile.

Dans le cadre de la présente invention, ledit anneau 15 peut être réalisé dans différents matériaux et notamment dans un matériau plastique, un matériau amorphe, ou un matériau cristallin. De préférence, il est réalisé dans un matériau composite.

A titre d'illustration, dans l'exemple de la figure 8, le guide d'onde 6 est stratifié dans un matériau 17 composite ou plastique, dont on voit des couches superposées 18.

Dans le cadre de la présente invention, ledit guide d'onde 6 correspond à l'un des éléments suivants : une fibre optique, comme dans l'exemple des figures 4 et 5 notamment, ou une structure de guide d'onde, par exemple en polymère, formée directement dans le matériau 17.

De préférence, l'anneau 15 est monté sur le missile 1 en étant centré par rapport à l'axe X-X dudit missile 1, par exemple en étant coaxial à l'axe X-X en cas d'anneau de section ronde.

Dans un mode de réalisation particulier, la pièce 16 comporte, comme représenté sur la figure 5, un enrésinage 20 au niveau d'une zone de sortie 21 hors de l'anneau 15, de deux parties 24 et 25 (d'extrémités libres respectives 7 et 8) du guide d'onde 6 (figure 4). Le guide d'onde 6 correspond à une fibre optique dans cet exemple. En outre, dans un mode de réalisation particulier, au moins une partie des tronçons (ou parties) d'extrémité 24 et 25 du guide d'onde 6, agencés à l'extérieur de l'anneau 15, sont pourvus d'une gaine 22 de protection mécanique, comme représenté sur la figure 5.

Par ailleurs, dans un mode de réalisation préféré, ledit anneau 15 comprend des zones de fragilisation 23A, 23B, comme représenté sur les figures 6 et 7. Ces zones de fragilisation 23A, 23B sont formées d'un retrait de matière dans l'épaisseur de l'anneau 15.

Le retrait de matière peut correspondre à une suite de perçages 14A, traversant ou non, suivant une ligne définissant une ligne de fragilisation (zone de fragilisation 23A) pour localiser et faciliter une rupture, comme représenté sur la figure 6. De tels perçages 14A peuvent être réalisés facilement, par exemple par usinage ou par laser.

Le retrait de matière pour localiser et faciliter une rupture peut également correspondre à une ou des découpes 14B réalisées dans l'anneau 15 (zone de fragilisation 23B), par exemple en biseau, comme représenté sur la figure 7.

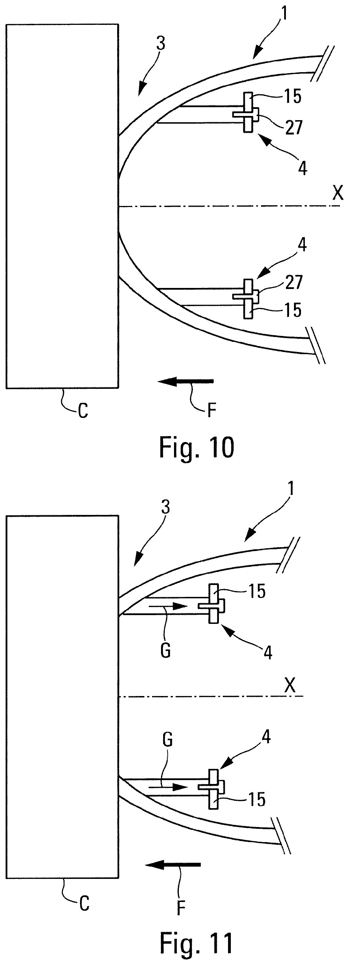

De plus, la ou les zones de fragilisation 23A et 23B sont agencées à proximité d'une ou de plusieurs zones (ou points) de fixation 26 (à savoir un trou pour la fixation sur l'exemple des figures 6 et 7) destinées à la fixation de l'anneau 15 sur le missile 1, via des moyens de fixation usuels, par exemple des vis 27 (figure 10). Les moyens de fixation peuvent également être d'un autre type, tel qu'un adhésif structurel par exemple. Cette proximité entre une ou plusieurs zones de fragilisation 23A, 23B et une ou plusieurs zones de fixation 26 permet de localiser et faciliter la rupture de l'anneau 15 à au moins une zone de fragilisation et ainsi la rupture du guide d'onde 6 lors d'un impact.

Lors d'un choc du missile 1 contre une cible C (figures 9 à 11), la déformation mécanique vient ouvrir (rompre) le circuit optique comprenant le guide d'onde 6. Ce principe fonctionne quelle que soit la vitesse de déplacement opérationnelle du missile 1 et quel que soit l'angle d'incidence du missile 1 sur la cible C. La rupture de liaison optique est parfaitement prévisible, car sa structure porteuse est composée d'une matière, par exemple composite ou plastique, dont le comportement dynamique en choc est maîtrisé. L'utilisation de fixations mécaniques, ainsi que de trous ou découpes de fragilisation, permettent de concentrer les efforts dans des zones bien délimitées et ainsi de prédire le moment de rupture de la liaison. Le nombre, la forme et la position des fixations mécaniques peuvent être variables. Le moment de rupture d'un mode de réalisation particulier du dispositif monté sur un missile particulier lors d'un impact est déterminé de façon empirique (calcul théorique et essais) et est donc identique pour des couples dispositif/missile similaires.

Par ailleurs, la forme de l'anneau 15 du dispositif 4 peut également être variable (ronde, carrée, oblongue,...) en fonction de la forme de la section du missile 1 à laquelle elle est adaptée. En outre, à titre d'illustration, l'anneau 15 peut présenter entre 0,5 cm et 5 cm de largeur L et entre 0,5 mm et 5 mm d'épaisseur E (figure 8). Par ailleurs, la nature du guide d'onde peut être diverse (fibre optique, guide d'onde 6, guide d'onde en polymère,...).

Les figures 9, 10 et 11 montrent schématiquement différentes positions successives de l'avant 3 du missile 1 équipé du dispositif 4 lors de son impact sur une cible C, par exemple une partie d'un engin mobile ou d'un bâtiment. Plus précisément :
- la figure 9 montre l'approche du missile 1 de la cible C ;
- la figure 10 illustre le contact du missile 1 avec la cible C entraînant une déformation de l'avant 3 du missile 1 ; et
- la figure 11 montre le transfert de l'effort mécanique (illustré par des flèches G) de la cible C vers le dispositif 4 entraînant la rupture guide d'onde 6 intégré dans l'anneau 15.

La configuration mécanique du dispositif 4 sur son châssis mécanique permet de prédire avec précision le moment de rupture du guide d'onde 6 et ainsi de calibrer le déclenchement de la chaîne de létalité avec une grande précision.

Le dispositif 4, tel que décrit ci-dessus, repose donc sur la rupture d'un guide d'onde optique 6, stratifié dans un matériau composite ou plastique ou intégré dans un matériau amorphe ou cristallin. L'intégration du dispositif 4 dans une structure mécanique permet de rendre le mode de rupture prédictif. De plus, les caractéristiques précitées du dispositif 4 garantissent une ouverture franche et définitive. En outre, le comportement mécanique du dispositif 4 améliore la précision et permet une excellente reproductibilité.

Le dispositif 4 peut s'appliquer à l'ensemble des gammes de vitesse de missiles existants (subsonique/supersonique).

La précision du système de mise à feu de la charge militaire se trouve ainsi grandement améliorée par des liaisons fortes entre le guide d'onde et le matériau (matrice plastique/composite notamment).

Par ailleurs, le dispositif 4 offre de meilleures performances qu'un système électrique. En effet, il supprime le risque de re-fermeture lors d'un impact à vitesse élevée, grâce au faible diamètre du guide d'onde 6 de l'ordre de quelques µm. De plus, l'encombrement est réduit, et le dispositif 4 présente une masse moins importante qu'un système électrique.

On décrit ci-après un procédé de fabrication d'un dispositif 4 tel que décrit ci-dessus, qui est pourvu d'une fibre optique comme guide d'onde. Ce procédé comprend la suite d'étapes successives suivantes :
E1/ former au moins une couche de matériau, par exemple composite ;
E2/ pratiquer une rainure circulaire dans la couche de matériau, cette rainure circulaire étant destinée à servir de logement ;
E3/ monter une fibre optique dans le logement formé par ladite rainure circulaire, en prévoyant que les deux extrémités de la fibre optique sortent du matériau ;
E4/ agencer au moins une couche supplémentaire de matériau sur ladite couche de matériau et ladite rainure circulaire, de manière à former un ensemble monobloc dont le logement est fermé ; et
E5/ découper un anneau dans ledit ensemble monobloc, autour dudit logement, de manière à former ladite pièce 16 indépendante, comme représenté sur la figure 4.

Ledit procédé comporte également une étape supplémentaire E6/ consistant à réaliser un enrésinage 20 (figure 5) au niveau d'une zone de sortie 21 des deux extrémités de la fibre optique 6, et une étape supplémentaire consistant à fixer des connecteurs 19 à ces extrémités.

Par conséquent, le dispositif 4 présente notamment les avantages principaux suivants :
- l'utilisation d'un guide d'onde optique 6, de préférence stratifié dans un matériau composite ou plastique, permet de rendre le mode de rupture de cette liaison prédictif sur l'ensemble des gammes de vitesse des missiles existants (subsonique/supersonique) ;
- la partie optique du système 9 est insensible aux ondes électromagnétiques (conduit/rayonné) ;
- le dispositif 4 permet d'éviter des risques de fausses alertes ou de re-fermeture ; et
- la masse du dispositif 4 peut être réduite de manière significative par suppression totale de matériau métallique (30 % ou plus).

## Revendications

1. Dispositif de détection d'impact, en particulier pour un missile, ledit dispositif (4) comportant au moins un guide d'onde (6) pourvu à chacune de ses deux extrémités (7, 8) d'un connecteur (19),
**caractérisé en ce qu'**il comporte un anneau (15) de contour externe courbe, ledit anneau (15) formant une pièce (16) indépendante à surfaces radiales planes (16A, 16B), et **en ce que** ledit guide d'onde (6) est intégré dans l'épaisseur (17) de l'anneau (15), les deux extrémités (7, 8) du guide d'onde (6) étant agencées à l'extérieur de l'anneau (15).

2. Dispositif selon la revendication 1,
**caractérisé en ce que** ledit anneau (15) est réalisé dans l'un des matériaux suivants : un matériau plastique, un matériau composite, un matériau amorphe, un matériau cristallin.

3. Dispositif selon l'une des revendications 1 et 2,
**caractérisé en ce que** ledit guide d'onde (6) correspond à l'un des éléments suivants : une fibre optique, une structure de guide d'onde.

4. Dispositif selon l'une des revendications 1 à 3,
**caractérisé en ce que** la pièce (16) comporte un enrésinage (20) au niveau d'une zone de sortie (21) hors de l'anneau (15), de deux parties (24, 25) du guide d'onde (6), ledit guide d'onde (6) correspondant à une fibre optique.

5. Dispositif selon l'une quelconque des revendications précédentes,
**caractérisé en ce qu'**au moins une partie d'au moins un tronçon d'extrémité (24, 25) du guide d'onde (6), agencé à l'extérieur de l'anneau 15, est pourvue d'une gaine de protection mécanique (22).

6. Dispositif selon l'une quelconque des revendications précédentes,
**caractérisé en ce que** ledit anneau (15) comprend au moins une zone de fragilisation (23A, 23B) formée d'un retrait de matière.

7. Dispositif selon la revendication 6,
**caractérisé en ce que** la zone de fragilisation (23A, 23B) est agencée à proximité d'une zone de fixation (26) destinée à la fixation de l'anneau (15).

8. Système de détection d'impact,
**caractérisé en ce qu'**il comporte un dispositif de détection d'impact (4) selon l'une quelconque des revendications 1 à 7 et une unité (5) de traitement de signaux, l'unité (5) de traitement de signaux comprenant au moins un élément (10) d'émission d'un faisceau optique, un élément (11) de détection d'un faisceau optique et un élément (12) de traitement de données lié auxdits éléments (10, 11) d'émission et de détection, l'unité (5) de traitement de signaux étant liée au guide d'onde (6) du dispositif de détection d'impact (4) de sorte que l'élément (10) d'émission est apte à émettre un faisceau optique à l'entrée d'une (7) des deux extrémités (7, 8) du guide d'onde (6) et l'élément (11) de détection est apte à détecter un tel faisceau optique à sa sortie à l'autre (8) des extrémités (7, 8) du guide d'onde (6).

9. Missile, ledit missile (1) comprenant un corps (2) et à l'extrémité avant dans le sens de déplacement (F) dudit missile (1) une ogive (3), l'ogive (3) étant fixée à l'avant du corps (2) via une interface de fixation,
**caractérisé en ce qu'**il comporte un dispositif de détection d'impact (4) selon l'une quelconque des revendications 1 à 7, qui est agencé entre le corps cylindrique (2) et l'ogive (3) au niveau de l'interface de fixation.

10. Missile selon la revendication 9,
**caractérisé en ce que** l'anneau (15) du dispositif de détection d'impact (4) comporte une section correspondant à la section du missile (1) au niveau de l'interface de fixation.

11. Procédé de fabrication d'un dispositif de détection d'impact selon l'une quelconque des revendications 1 à 7,
**caractérisé en ce qu'**il comprend au moins la suite d'étapes successives suivantes, consistant :
- à former au moins une couche de matériau ;
- à pratiquer une rainure circulaire dans la couche de matériau, cette rainure circulaire étant destinée à servir de logement ;
- à monter une fibre optique dans le logement formé par ladite rainure circulaire, en prévoyant que les deux extrémités de la fibre optique sortent du matériau ;
- à agencer au moins une couche supplémentaire de matériau sur ladite couche de matériau et ladite rainure circulaire, de manière à former un ensemble monobloc dont le logement est fermé ; et
- à découper un anneau dans ledit ensemble monobloc autour dudit logement de manière à former ladite pièce (16) indépendante.

12. Procédé selon la revendication 11,
**caractérisé en ce qu'**il comporte une étape supplémentaire consistant à réaliser un enrésinage (20) au niveau d'une zone de sortie (21) des deux extrémités de la fibre optique (6).

## Patentansprüche

1. Vorrichtung zur Detektion von Einschlägen, insbesondere von einem Flugkörper, wobei die Vorrichtung (4) zumindest einen Wellenleiter (6) umfasst, welcher auf jedem seiner beiden Extremitäten (7, 8) mit einem Verbinder (19) versehen ist, **dadurch gekennzeichnet, dass** er einen Ring (15) mit einer gekrümmten Außenkontur umfasst, wobei der Ring (15) ein unabhängiges Stück (16) auf flachen radialen Oberflächen (16A, 16B) umfasst, und dadurch, dass der Wellenleiter (6) in die Dicke (17) des Rings (15) integriert ist, wobei die beiden Extremitäten (7, 8) des Wellenleiters (6) an der Außenseite des Rings (15) angeordnet sind.

2. Vorrichtung nach Anspruch 1,
**dadurch gekennzeichnet, dass** der Ring (15) aus einem der folgenden Materialen hergestellt ist: einem Plastikmaterial, einem Komposit-Material, einem amorphen Material, einem kristallinen Material.

3. Vorrichtung nach einem der vorstehenden Ansprüche 1 und 2,
**dadurch gekennzeichnet, dass** der Wellenleiter (6) zu einem der folgenden Elemente korrespondiert: einer Glasfaser, einer Wellenleiterstruktur.

4. Vorrichtung nach einem der vorstehenden Ansprüche 1 bis 3,
**dadurch gekennzeichnet, dass** das Stück (16) eine Einharzung (20) auf einer Höhe einer Ausgangszone (21) außerhalb des Rings (15), von zwei Seiten (24, 25) des Wellenleiters (6), umfasst, wobei der Wellenleiter (6) zu einer Glasfaser korrespondiert.

5. Vorrichtung nach einem der vorstehenden Ansprüche,
**dadurch gekennzeichnet, dass** zumindest ein Teil von zumindest einem Abschnitt der Extremitäten (24, 25) des Wellenleiters (6), angeordnet außerhalb des Rings (15), mit einer Hülle zum mechanischen Schutz (22) versehen ist.

6. Vorrichtung nach einem der vorstehenden Ansprüche,
**dadurch gekennzeichnet, dass** der Ring (15) zumindest eine Schwächungszone (23A, 23B) umfasst, welche aus einer Materialschwindung gebildet ist.

7. Vorrichtung nach Anspruch 6,
**dadurch gekennzeichnet, dass** die Schwächungszone (23A, 23B) in der Nähe einer Befestigungszone (26) angeordnet ist, welche zur Befestigung des Rings (15) bestimmt ist.

8. System zur Detektion von Einschlägen,
**dadurch gekennzeichnet, dass** es eine Vorrichtung zur Detektion von Einschlägen (4) nach einem der Ansprüche 1 bis 7 und eine Einheit (5) der Signalverarbeitung umfasst, wobei die Einheit (5) der Signalverarbeitung zumindest ein Element (10) der Aussendung eines optischen Strahls, ein Element (11) der Detektion des optischen Strahls und ein Element (12) zur Verarbeitung der Daten, die mit den Elementen (10, 11) der Emission und Detektion verbunden sind, wobei die Einheit (5) der Signalverarbeitung mit der Wellenleiter (6) der Vorrichtung zur Detektion von Einschlägen (4) derart verbunden ist, dass das Element (10) der Emission geeignet ist, einen optischen Strahl am Eingang eines (7) der beiden Extremitäten (7, 8) des Wellenleiters (6) auszusenden und das Element (11) der Detektion geeignet ist, einen solchen Strahl am Ausgang des anderen (8) der Extremitäten (7, 8) des Wellenleiters (6) zu detektieren.

9. Flugkörper, wobei der Flugkörper (1) einem Körper (2) und an der vorderen Extremität in der Bewegungsrichtung (F) des Flugkörpers (1) eine Ogive (3) umfasst, wobei die Ogive (3) vor dem Körper (2) über eine Befestigungsgrenzfläche befestigt ist,
**dadurch gekennzeichnet, dass** er eine Vorrichtung zur Detektion eines Einschlags (4) nach einem der vorstehenden Ansprüche 1 bis 7 umfasst, die zwischen dem zylindrischen Körper (2) und der Ogive (3) auf Höhe der Befestigungsgrenzfläche angeordnet ist.

10. Flugkörper nach Anspruch 9,
**dadurch gekennzeichnet, dass** der Ring (15) der Vorrichtung der Detektion eines Einschlags (4) einen Abschnitt umfasst, der zum Abschnitt des Flugkörpers (1) auf der Höhe der Befestigungsgrenzfläche korrespondiert.

11. Herstellungsverfahren einer Vorrichtung zur Detektion eines Einschlags nach einem der vorstehenden Ansprüche 1 bis 7,
**dadurch gekennzeichnet, dass** es zumindest die Folge der aufeinanderfolgenden folgenden Schritte umfasst, bestehend aus:
- Bilden zumindest einer Materialschicht;
- Einbringen zumindest einer kreisförmigen Rille in die Materialschicht, wobei die kreisförmige Rille ausgelegt ist, als Aufnahme zu dienen;
- Montieren einer Glasfaser in die durch die kreisförmige Rille gebildete Aufnahmen, in dem vorgesehen wird, dass die beiden Extremitäten der Glasfaser aus dem Material austreten;
- Anordnen zumindest einer zusätzlichen Materialschicht auf der Materialschicht und der kreisförmigen Rille, derart, ein einstückiges Ganzes zu bilden, in dem die Aufnahme geschlossen ist; und
- Schneiden eines Rings der Art in das einstückige Ganze um die Aufnahme, um das unabhängige Stück (16) zu bilden.

12. Verfahren nach Anspruch 11,
**dadurch gekennzeichnet, dass** es den zusätzlichen Schritt, bestehend aus Erzielen einer Einharzung (20) in Höhe der Ausgangszone (21) der beiden Extremitäten der Glasfaser (6), umfasst.

## Claims

1. Impact detection device, in particular for a missile, said device (4) comprising at least one waveguide (6) provided at each of its two ends (7, 8) with a connector (19),
**characterised in that** it comprises a ring (15) with curved outer contour, said ring (15) forming a part (16) separate to the flat radial surfaces (16A, 16B), and **in that** said waveguide (6) is integrated in the thickness (17) of the ring (15), the two ends (7, 8) of the waveguide (6) being arranged outside the ring (15).

2. Device according to claim 1,
**characterised in that** said ring (15) is produced in one of the following materials: a plastic material, a composite material, an amorphous material, a crystalline material.

3. Device according to one of claims 1 and 2,
**characterised in that** said waveguide (6) corresponds to one of the following elements: an optical fibre, a waveguide structure.

4. Device according to one of the claims 1 to 3,
**characterised in that** the part (16) comprises an encapsulation (20) at the outlet zone (21) away from the ring (15), with two portions (24, 25) of the waveguide (6), said waveguide (6) corresponding with an optical fibre.

5. Device according to any one of the previous claims,
**characterised in that** at least one portion of at least one end section (24, 25) of the waveguide (6), arranged outside the ring (15), is provided with a mechanical protective sheath (22).

6. Device according to any one of the previous claims, **characterised in that** said ring (15) comprises at least one breakable zone (23A, 23B) formed by removal of material.

7. Device according to claim 6, **characterised in that** the breakable zone (23A, 23B) is arranged near a fixing zone (26) intended for fixing the ring (15).

8. System of impact detection,
**characterised in that** it comprises an impact detection device (4) according to any one of the claims 1 to 7 and a signal processing unit (5), the signal processing unit (5) comprising at least one optical beam emission element (10), one optical beam detection element (11) and one data processing element (12) connected to said elements (10, 11) of emission and detection, the signal processing unit (5) being connected to the waveguide (6) of the impact detection device (4) such that the emission element (10) is capable of transmitting an optical beam to the inlet of one (7) of the two ends (7, 8) of the waveguide (6) and the detection element (11) is capable of detecting such an optical beam at its outlet to the other (8) of the ends (7, 8) of the waveguide (6).

9. Missile, said missile (1) comprising a body (2) and at the front end in the direction of movement (F) of said missile (1) a warhead (3), the warhead (3) being fixed to the front of the body (2) by means of a fixing interface,
**characterised in that** it comprises an impact detection device (4) according to any one of the claims 1 to 7, which is arranged between the cylindrical body (2) and the warhead (3) at the fixing interface.

10. Missile according to claim 9, **characterised in that** the ring (15) of the impact detection device (4) comprises a cross-section corresponding to the cross-section of the missile (1) at the fixing interface.

11. Method of manufacturing an impact detection device according to any one of the claims 1 to 7, **characterised in that** it comprises at least the following succession of steps, consisting in:
- forming at least one layer of material;
- making a circular groove in the layer of material, this circular groove being intended to serve as a housing;
- mounting an optical fibre in the housing formed by said circular groove, by planning that the two ends of the optical fibre come out from the material;
- arranging at least one additional layer of material on said layer of material and said circular groove, in such a way as to form a single assembly whose housing is closed; and
- cutting a ring in said single assembly around said housing in such a way as to form said separate part (16).

12. Method according to claim 11, **characterised in that** it comprises an additional step consisting in producing an encapsulation (20) at the outlet zone (21) of the two ends of the optical fibre (6).
